# EUROPEAN PATENT APPLICATION

(11) **EP 4 365 971 A1**
(43) Date of publication of application: **08.05.2024**
(21) Application number: 22918495.7
(22) Date of filing: 29.12.2022
(51) Int. Cl.: H01M 4/04, H01M 4/02, H01M 4/13

(54) **BATTERY ELECTRODE PLATE, COATING METHOD, COATING APPARATUS, AND BATTERY CELL**

(30) Priority: 05.01.2022 CN 202210010983
(71) Applicant: Contemporary Amperex Technology Co., Limited, Ningde, Fujian 352100 (CN)
(72) Inventor: LI, Shisong, Ningde, Fujian 352100 (CN); XU, Baohua, Ningde, Fujian 352100 (CN); SHANG, Hongwu, Ningde, Fujian 352100 (CN); WANG, Zi, Ningde, Fujian 352100 (CN)
(74) Representative: Rowlands, Stuart Michael
(86) International application number: PCT/CN2022/143569
(87) International publication number: WO 2023/131054

(57) **Abstract**

The present application relates to the technical field of new energy, and particularly relates to a battery electrode plate, a coating method, a coating apparatus, and a battery cell. The battery electrode plate comprises an electrode plate main body, wherein active material layers are respectively arranged on two surfaces of the electrode plate main body. The battery electrode plate further comprises an identification layer, which is arranged on at least one surface and makes the shapes or positions of coatings on the two surfaces different. By means of the manner, the present application can distinguish between the two surfaces of the battery electrode plate that are asymmetrically coated.

## Description

### Cross-reference

The present application claims the priority of Chinese Patent Application No. 202210010983.1, filed on January 5, 2022 and entitled "BATTERY ELECTRODE PLATE, COATING METHOD, COATING DEVICE, AND BATTERY CELL", which is incorporated in its entirety herein by reference.

### Technical Field

The present application relates to the field of new energy technology, and in particular to a battery electrode plate, a coating method, a coating device, and a battery cell.

### Background Art

A power battery works through the charging and discharging of an internal battery cell assembly. The battery cell assembly includes electrode plates and a separator which are arranged at intervals. The two surfaces of the electrode plate need to be coated with an active material to enable the battery cell assembly to have charging and discharging functions. With the rapid development of new energy, more and higher requirements have been put forward for the properties of the power battery. In order to satisfy the requirements, a method for asymmetric coating on the two surfaces of the electrode plate in battery cell assembly are more and more widely applied.

After the two surfaces of the electrode plate are asymmetrically coated, the two surfaces cannot be accurately identified by the naked eye or a machine, and as a result, incorrect identification of the battery electrode plate may occur.

### Summary of the Invention

In view of the above problems, the present application provides a battery electrode plate, a coating method, a coating device, and a battery cell, so as to facilitate the distinction between two asymmetrically-coated surfaces of the battery electrode plate.

According to one aspect of the present application, a battery electrode plate is provided. The battery electrode plate includes an electrode plate body, and each of two surfaces of the electrode plate body is provided with an active material layer. The battery electrode plate further includes an identification layer. The identification layer is arranged on at least one surface, and the coatings on the two surfaces are different in shape or position.

By arranging the identification layer on the at least one surface of the electrode plate body and making the coatings on the two surfaces different in shape or position, the two surfaces of the electrode plate body can be accurately identified and distinguished by the naked eye or a machine, thereby ensuring that the battery electrode plate can be accurately positioned, produced, and assembled in the subsequent processes.

In some exemplary embodiments, only one surface is provided with the identification layer. By arranging the active material layer and the identification layer on one surface of the electrode plate body, and only arranging the active material layer on the other surface, the two surfaces of the battery electrode plate are distinguished and identified.

In some exemplary embodiments, the identification layers are respectively arranged on the two surfaces, and the identification layers on the two surfaces are different in shape or position. By setting the identification layers on the two surfaces of the electrode plate body to be different in shape or position, the two surfaces of the battery electrode plate are distinguished and identified.

In some exemplary embodiments, on one surface provided with the identification layer, the identification layer and the active material layer extend in a first direction and are spaced in a second direction, and both the first direction and the second direction are located on the surface and are perpendicular to each other. The identification layer and the active material layer extend in the first direction, thereby ensuring uniformity of the appearance of the battery electrode plate, and facilitating the coating of the identification layer and the active material layer. The identification layer and the active material layer are spaced in the second direction, thereby avoiding the situation that the identification layer makes contact with the active material layer, causing the identification layer not easy to identify, and resulting in difficulties in distinguishing the two surfaces of the battery electrode plate.

In some exemplary embodiments, on one surface provided with the identification layer, the identification layer and the active material layer extend in a first direction, the identification layer includes at least two identification strips, the at least two identification strips are spaced in a second direction, and both the first direction and the second direction are located on the surface and are perpendicular to each other. By arranging the identification layer to have the two separate identification strips, one of the identification strips may make contact with the active material layer, and therefore the two sides of the active material layer can be insulated while ensuring that the two surfaces of the battery electrode plate are rapidly identified.

In some exemplary embodiments, the identification layer is an insulating layer. By setting the identification layer as the insulating layer, the identification layer coating the electrode plate body can facilitate identification of the two surfaces of the battery electrode plate, and insulating protection for the active material layer on the electrode plate body.

In some exemplary embodiments, the active material layer sequentially includes a conductive adhesive layer and an active layer on the surface, and the identification layer is the conductive adhesive layer. For some battery electrode plates, the active material layer on the surface of the battery electrode plate is formed by sequentially coating the surface of the battery electrode plate with the conductive adhesive layer and the active layer. In order to improve the coating efficiency of the battery electrode plate, the identification layer is also set as the conductive adhesive layer, which allows simultaneous coating of the conductive adhesive layer in the identification layer and the identification layer, thereby enhancing the processing efficiency of the battery electrode plate. Additionally, by setting the identification layer as the conductive adhesive layer, the kinds of coatings are reduced, thereby reducing preparation work before the coating.

In some exemplary embodiments, the electrode plate body is a single-layer current collector or a composite current collector. The single-layer current collector or the composite current collector is used for collecting the current generated by the active material of the battery in order to form a larger current for external output, which requires sufficient contact between the current collector and the active material layer, and minimum internal resistance.

According to another aspect of the present application, a battery electrode plate coating method is provided. A battery electrode plate includes an electrode plate body. The battery electrode plate coating method includes: coating each of two surfaces of the electrode plate body with an active material to form an active material layer, and coating at least one surface with an identification material to form an identification layer, thereby making the coatings on the two surfaces different in shape or position.

By coating at least one surface of the electrode plate body with the identification material to form the identification layer, the coatings on the two surfaces are different in shape or position, such that the two surfaces of the electrode plate body can be accurately identified and distinguished by the naked eye or the machine, thereby ensuring that the battery electrode plate can be accurately positioned, produced, and assembled in the subsequent process.

In some exemplary embodiments, only one surface is coated with the identification material to form the identification layer. By coating one surface of the electrode plate body with the active material layer and the identification layer and only coating the other surface with the active material layer, the two surfaces of the battery electrode plate are distinguished and identified.

In some exemplary embodiments, each of two surfaces is coated with the identification material to form the identification layer, and the identification layers on the two surfaces are different in shape or position. By setting the identification layers on the two surfaces of the electrode plate body to be different in shape or position, the two surfaces of the battery electrode plate are distinguished and identified.

In some exemplary embodiments, the coating each of two surfaces of the electrode plate body with an active material to form an active material layer includes: coating, in a first direction, each of the two surfaces with the active material to form the active material layer. The coating at least one surface with an identification material to form an identification layer includes: coating, in the first direction, at least one surface with the identification material to form the identification layer. The identification layer and the active material layer are spaced in a second direction. Both the first direction and the second direction are located on the surface and are perpendicular to each other. By the coating of the identification layer and the active material layer in the first direction, uniformity of the appearance of the battery electrode plate is guaranteed, and the coating of the identification layer and the active material layer is facilitated. The identification layer and the active material layer are spaced in the second direction, thereby avoiding the situation that the identification layer makes contact with the active material layer, causing the identification layer not easy to identify, and resulting in difficulties in distinguishing the two surfaces of the battery electrode plate.

In some exemplary embodiments, the coating each of two surfaces of the electrode plate body with an active material to form an active material layer includes: coating, in a first direction, each of the two surfaces with the active material to form the active material layer. The coating at least one surface with an identification material to form an identification layer includes: coating, in the first direction, at least one surface with the identification material to form at least two identification strips. The at least two identification strips are spaced in a second direction. Both the first direction and the second direction are located on the surface and are perpendicular to each other. By arranging the identification strips in contact with the edge of the active material layer on each of the two surfaces of the battery electrode plate, insulating protection is achieved for the two sides of the active material layer, thereby providing a favorable working condition for the active material layer, helping to prolong the service life of the battery electrode plate, and avoiding the short-circuit fault occurring to the battery electrode plate. The identification strips on one surface of the battery electrode plate are spaced from the identification layer to ensure rapid identification of the two surfaces of the battery electrode plate.

In some exemplary embodiments, the coating each of two surfaces of the electrode plate body with an active material to form an active material layer includes: sequentially coating each of the two surfaces with a conductive adhesive layer material and an active material layer material to form the active material layer. The coating at least one surface with an identification material to form an identification layer includes: coating at least one surface with the conductive adhesive layer material to form the identification layer. For some battery electrode plates, the active material layer on the surface of the battery electrode plate is formed by sequentially coating the surface of the battery electrode plate with the conductive adhesive layer and the active layer. In order to improve the coating efficiency of the battery electrode plate, the identification layer is also set as the conductive adhesive layer, which allows simultaneous coating of the conductive adhesive layer in the identification layer and the identification layer, thereby enhancing the coating efficiency of the battery electrode plate. Additionally, by setting the identification layer as the conductive adhesive layer, the kinds of coatings are reduced, thereby reducing preparation work before the coating.

According to another aspect of the present application, a battery electrode plate coating device is provided. A battery electrode plate includes an electrode plate body. The battery electrode plate coating device includes: a backup roll used for driving the electrode plate body to move; and a coating structure arranged on one side of the backup roll and used for coating each of two surfaces of the electrode plate body with an active material to form an active material layer, and coating at least one surface with an identification material to form an identification layer, where the coatings on the two surfaces are different in shape or position.

By arranging the backup roll, movement control over the battery electrode plate is achieved. By the coating structure, the surface of the electrode plate body is coated with the active material and the identification material, and the coatings on the two surfaces are different in shape or position, such that the two surfaces of the electrode plate body can be accurately identified and distinguished by the naked eye or a machine, thereby ensuring that the battery electrode plate can be accurately positioned, produced, and assembled in the subsequent process.

In some exemplary embodiments, the coating structure includes a first coating head aligned with one side of the backup roll and used for coating the electrode plate body on the backup roll. A first flow channel and a second flow channel are arranged in the first coating head, the first flow channel is used for circulating the active material, and the second flow channel is used for circulating the identification material. The first coating head is aligned with one side of the backup roll, making the material extruded out from the first coating head smoothly coat the electrode plate body. Through the first flow channel and the second flow channel spaced in the first coating head, the first flow channel is used for circulating the active material, and the second flow channel is used for circulating the identification material, thereby realizing simultaneous coating of the active material and the identification material, effectively ensuring the alignment degree between the identification material and the active material coating the electrode plate body, then, improving the production yield of the electrode plate body, ensuring the neatness of the appearance of the electrode plate body, and facilitating easy identification on the two surfaces of the battery electrode plate.

In some exemplary embodiments, the coating structure includes a second coating head aligned with one side of the backup roll and used for coating the electrode plate body on the backup roll. A third flow channel and a fourth flow channel are arranged in the second coating head. The third flow channel is used for circulating the active material, and the fourth flow channel is used for circulating the identification material. An outlet of the fourth flow channel is provided with a partition structure. The partition structure divides the outlet of the fourth flow channel into a first outlet and a second outlet which are partitioned. The edge of an outlet of the third flow channel is in contact with the edge of the first outlet. By arranging the third flow channel and the fourth flow channel in the second coating head, the third flow channel is used for circulating the active material, and the fourth flow channel is used for circulating the insulating material, thereby realizing simultaneous coating of the active material and the insulating material, ensuring the contact alignment degree and effectiveness of identification strips and the active material layer on the electrode plate body, and achieving reliable and effective insulating protection for the active material by the insulating material. By arranging the partition structure at the outlet of the fourth flow channel and dividing the outlet of the fourth flow channel into the spaced first outlet and second outlet, the flow channel structure in the second coating head is effectively simplified, and the mold opening cost of the second coating head is reduced. By conveying the insulating material into the fourth flow channel, the insulating material respectively forms the spaced identification strips and identification layer on the electrode plate body through the first outlet and the second outlet, thereby realizing simultaneous coating of the active material, the identification material, and the insulating material, and ensuring the alignment degree of the active material, the identification material, and the insulating material. By using the same material for both the insulating material and the identification material, the early preparation work for the coating can be simplified, and the coating efficiency of the battery electrode plate is improved.

In some exemplary embodiments, the partition structure is in the shape of a triangular prism, and one side surface of the partition structure is located on a plane where the outlet of the fourth flow channel is located. By arranging the partition structure into the triangular prism, arranging one side surface of the partition structure on the plane where the outlet of the fourth flow channel is located, and ensuring that one of edges of the triangular prism faces the interior of the fourth flow channel, the pressure exerted on the partition structure from the material circulating in the fourth flow channel is reduced, and stability of the partition structure is ensured.

In some exemplary embodiments, the coating structure includes a first printing groove and second printing grooves which are formed in an annular side surface of the backup roll in a circumferential direction. The first printing groove is spaced from the second printing grooves. The first printing groove is used for accommodating the active material, and the second printing grooves are used for accommodating the identification material. When the backup roll rotates, the electrode plate body is driven to move on the surface of the backup roll. The active material in the first printing groove and the identification material in the second printing grooves in the surface of the backup roll make contact with the electrode plate body, such that simultaneous printing and coating of the active material and the identification material on the surface of the electrode plate body are realized, and the coating alignment degree of the active material and the identification material can be effectively ensured.

According to another aspect of the present application, a battery cell is further provided, and includes the battery electrode plate in any above embodiment.

The above description is only a summary of the technical solutions of the present application. In order to understand the technical means of the present application more clearly, the technical means can be implemented according to the content of the specification. Furthermore, to make the above content and other objectives, features, and advantages of the present application more comprehensible, specific implementations of the present application are exemplified below.

### Description of Drawings

Various other advantages and benefits will become apparent to those of ordinary skill in the art upon reading the following detailed description of the specific implementations. The drawings are only used for illustrating the specific implementations but are not to be considered as limitations to the present application. Same components are denoted by same reference numerals throughout the drawings. In the drawings:
FIG. 1 is a structural schematic diagram of a vehicle according to an embodiment of the present application;
FIG. 2 is an exploded schematic diagram of a battery according to an embodiment of the present application;
FIG. 3 is an exploded schematic diagram of a battery cell according to an embodiment of the present application;
FIG. 4 is a structural schematic diagram of one surface of a section of a battery electrode plate according to an embodiment of the present application;
FIG. 5 is a structural schematic diagram of the other surface of the section of the battery electrode plate according to this embodiment of the present application;
FIG. 6 is a structural schematic diagram of one surface of a section of a battery electrode plate according to another embodiment of the present application;
FIG. 7 is a structural schematic diagram of the other surface of the section of the battery electrode plate according to the another embodiment of the present application;
FIG. 8 is a structural schematic diagram of one surface of a section of a battery electrode plate according to another embodiment of the present application;
FIG. 9 is a structural schematic diagram of the other surface of the section of the battery electrode plate according to the another embodiment of the present application;
FIG. 10 is a cross-sectional schematic diagram of a battery electrode plate according to another embodiment of the present application;
FIG. 11 is a schematic flowchart of a battery electrode plate coating method according to an embodiment of the present application;
FIG. 12 is a schematic flowchart of a battery electrode plate coating method according to another embodiment of the present application;
FIG. 13 is a schematic flowchart of a battery electrode plate coating method according to another embodiment of the present application;
FIG. 14 is a schematic flowchart of a battery electrode plate coating method according to another embodiment of the present application;
FIG. 15 is a schematic diagram of a side view of a battery electrode plate coating device according to an embodiment of the present application;
FIG. 16 is a schematic diagram of a top view of a battery electrode plate coating device according to an embodiment of the present application;
FIG. 17 is a schematic diagram of a top view of a battery electrode plate coating device according to another embodiment of the present application; and
FIG. 18 is a structural schematic diagram of a battery electrode plate coating device according to another embodiment of the present application.

### Detailed Description

Embodiments of technical solutions of the present application are described in detail below in conjunction with the accompanying drawings. The following embodiments are only used to more clearly describe the technical solutions of the present application, and therefore are only used as examples but cannot be used to limit the scope of protection of the present application.

Unless otherwise defined, all technical and scientific terms used herein have the same meaning as commonly understood by those skilled in the art belonging to the technical field of the present application; the terms used herein are only for the purpose of describing the specific embodiments and are not intended to limit the present application; and the terms "including" and "having" and any variations thereof in the specification and the claims of the present application and in the description of the accompanying drawings above are intended to cover non-exclusive inclusion.

In the description of the embodiments of the present application, the technical terms "first", "second", etc. are used only to distinguish different objects, but not to be understood as indicating or implying a relative importance or implicitly specifying the number, particular order, or primary and secondary relationship of the indicated technical features. In the description of the embodiments of the present application, the meaning of "a plurality of' is two or more, unless otherwise explicitly and specifically defined.

A reference herein to "an embodiment" means that a particular feature, structure, or characteristic described in combination with the embodiments can be included in at least one embodiment of the present application. The appearance of this phrase in various places in the specification does not necessarily refer to the same embodiment, nor is it a separate or alternative embodiment that is mutually exclusive from other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of' refers to two or more (including two), and similarly, "multiple groups" refers to two or more groups (including two groups), and "multiple sheets" refers to two or more sheets (including two sheets).

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or position relationship shown in the accompanying drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection or an integral connection, a mechanical connection or an electrical connection, a direct connection, an indirect connection through an intermediate medium, an internal connection of two elements or interaction between two elements. Those of ordinary skill in the art can understand the specific meanings of the above terms in the embodiments of the present application according to specific situations.

With the development of science and technology and the increasingly widespread application fields of power batteries, the batteries are required to have better and more powerful performance while the optimization of battery performance is largely achieved by asymmetric coating of active materials on the two sides of electrode plates in a battery cell assembly.

The inventors of the present application notice that in an automated production line, a large number of electrode plates are produced. After asymmetric coating of the two sides of each electrode plate, it is unable to directly distinguish and identify the unevenly-coated two sides of the electrode plate, which may lead to the incorrect identification of the unevenly-coated two sides of the electrode plate of a battery, resulting in subsequent assembly errors of the electrode plates of the battery and ultimately leading to the production of the disqualified battery.

Based on this, the present application provides a battery electrode plate, a battery electrode plate coating method, a battery electrode plate coating device, and a battery cell. A coating is formed by combining an active material layer and an identification layer on each of two surfaces of an electrode plate body. The coatings on the two surfaces of the electrode plate body are set to have different shapes or positions, thereby identifying and distinguishing the two unevenly-coated surfaces of the battery electrode plate, and guaranteeing accuracy of identification of the two surfaces of the battery electrode plate.

The battery disclosed in this embodiment of the present application can be used, but not limited to, in electrical apparatus such as a vehicle, a ship, or an aircraft.

Examples of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

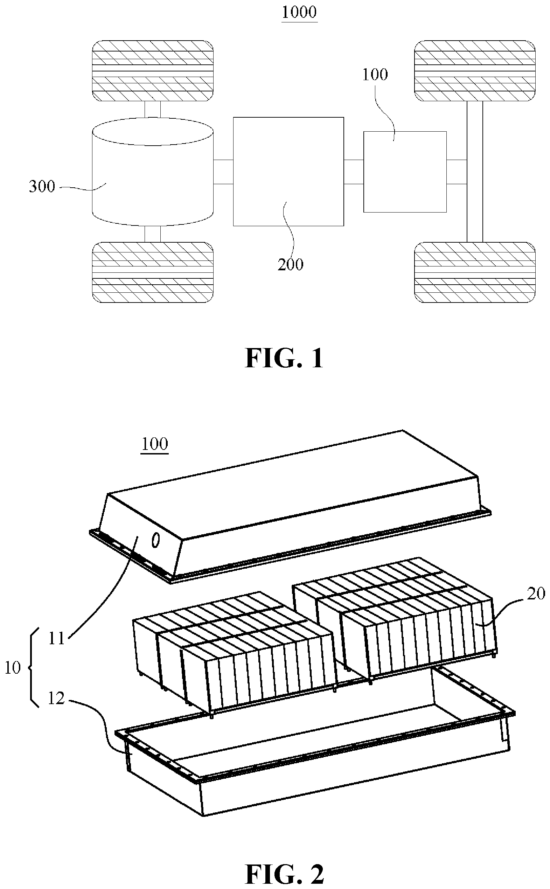

Referring to FIG. 1, FIG. 1 is a structural schematic diagram of a vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, or an extended range electric vehicle, etc. The vehicle 1000 is internally provided with a battery 100, and the battery 100 may be arranged at a bottom or head or tail of the vehicle 1000. The battery 100 may be used to supply power to the vehicle 1000. For example, the battery 100 may be used as an operating power supply of the vehicle 1000. The vehicle 1000 may further include a controller 200 and a motor 300. The controller 200 is configured to control the battery 100 to supply power to the motor 300, such as to meet operation power demands during start, navigation and running of the vehicle 1000.

In some embodiments of the present application, the battery 100 not only may serve as the operating power supply of the vehicle 1000, but also may serve as a driving power supply of the vehicle 1000, so as to replace or partially replace fuel or natural gas to provide driving power for the vehicle 1000.

Referring to FIG. 2, FIG. 2 is an exploded schematic diagram of a battery 100 according to some embodiments of the present application. The battery 100 includes a box body 10 and a battery cell 20, and the battery cell 20 is accommodated in the box body 10, where the box body 10 is used to provide an accommodating space for the battery cell 20, and the box body 10 can be of various structures. In some embodiments, the box body 10 may include a first part 11 and a second part 12. The first part 11 and the second part 12 are covered by each other, and together define the accommodating space for accommodating the battery cell 20. The second part 12 may be of a hollow structure with one end open, the first part 11 may be of a plate-like structure, and the first part 11 covers the opening side of the second part 12, so that the first part 11 and the second part 12 together define the accommodating space. Each of the first part 11 and the second part 12 may also be of a hollow structure with one side open, and the opening side of the first part 11 covers the opening side of the second part 12. Of course, the box body 10 formed by the first part 11 and the second part 12 may be in various shapes, such as a cylinder or a cuboid.

In the battery 100, there may be a plurality of battery cells 20, and the plurality of battery cells 20 may be connected in series or parallel or in a series-parallel connection, and the series-parallel connection means that the plurality of battery cells 20 are connected in both series and parallel. The plurality of battery cells 20 may be directly connected in series, or in parallel or in the series-parallel connection, and then are assembled as a whole to be accommodated in the box body 10; and of course, the battery 100 may also be formed in the manner that the plurality of battery cells 20 are connected in series, or in parallel or in the series-parallel connection to form battery modules, and the plurality of battery modules are then connected in series, or in parallel or in the series-parallel connection, and is accommodated in the box body 10. The battery 100 may further include other structures. For example, the battery 100 may further include a convergence component for electrically connecting the plurality of battery cells 20.

Each battery cell 20 may be a secondary battery or a primary battery, and may also be a lithium-sulfur battery, a sodium-ion battery or a magnesium-ion battery, but is not limited thereto. The battery cell 20 may be in the shape of a cylinder, a flat body, a cuboid or others.

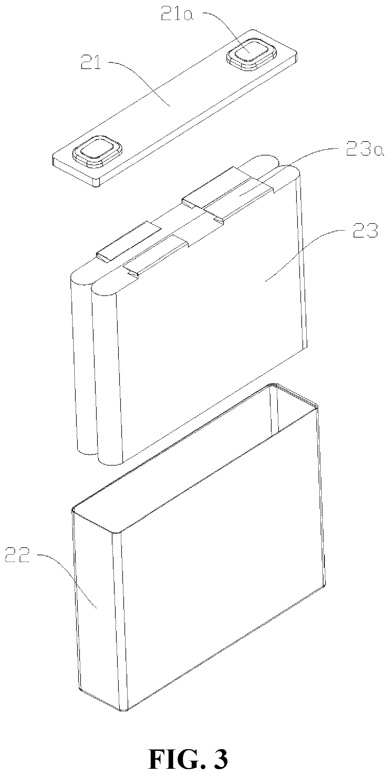

Referring to FIG. 3, FIG. 3 is a schematic diagram of a breakdown structure of a battery cell 20 in a battery 100 according to some embodiments of the present application. The battery cell 20 refers to the smallest unit constituting the battery. As shown in FIG. 3, the battery cell 20 includes an end cover 21, a case 22, a battery cell assembly 23 and other functional components.

The end cover 21 is a component that covers an opening of the case 22 to isolate the internal environment of the battery cell 20 from the external environment. Without limitation, the shape of the end cover 21 may be adaptive to the shape of the case 22 so as to be matched with the case 22. In some embodiments, the end cover 21 may be made of a material (e.g., an aluminum alloy) with a certain hardness and strength, accordingly, the end cover 21 is not easily deformed when being subjected to extrusion and collisions, such that the battery cell 20 can have higher structural strength, and safety performance can also be improved. Functional components such as electrode terminals 21a may be arranged on the end cover 21. The electrode terminals 21a can be used for being electrically connected to the battery cell assembly 23 for outputting or inputting electric energy of the battery cell 20. In some embodiments, the end cover 21 may be further provided with a pressure relief mechanism used for relieving internal pressure when the internal pressure or temperature of the battery cell 20 reaches a threshold. The end cover 21 may be made of various materials, such as copper, iron, aluminum, stainless steel, an aluminum alloy and plastic, which is not particularly limited in this embodiment of the present application. In some embodiments, an insulating member may be further arranged on an inner side of the end cover 21 and may be used for isolating an electrical connection component in the case 22 from the end cover 21, thereby reducing the risk of a short circuit. Exemplarily, the insulating member may be made of plastic, rubber, etc.

The case 22 is an assembly used to be matched with the end cover 21 to form the internal environment of the battery cell 20, where the formed internal environment can be used to accommodate the battery cell assembly 23, an electrolyte and other components. The case 22 and the end cover 21 may be separate components, the opening may be formed in the case 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When it is required that an interior of the case 22 is encapsulated, the case 22 is covered with the end cover 21. The case 22 may be in various shapes and sizes, such as a rectangular solid, a cylinder and a hexagonal prism. Specifically, the shape of the case 22 may be determined according to the specific shape and size of the battery cell assembly 23. The case 22 may be made of various materials, such as copper, iron, aluminum, stainless steel, an aluminum alloy and plastic, which is not particularly limited in this embodiment of the present application.

The battery cell assembly 23 is a component in which an electrochemical reaction occurs in the battery cell 20. One or more battery cell assemblies 23 may be contained within the case 22. The battery cell assembly 23 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the battery cell assembly, and the portions, without the active materials, of the positive electrode plate and the negative electrode plate respectively constitute tabs 23a. The positive electrode tab and the negative electrode tab may be located at one end of the main body part together or at two ends of the main body part respectively. In the charging and discharging process of the battery, the positive electrode active material and the negative electrode active material react with the electrolyte, and the tabs 23a are connected to the electrode terminals to form a current loop.

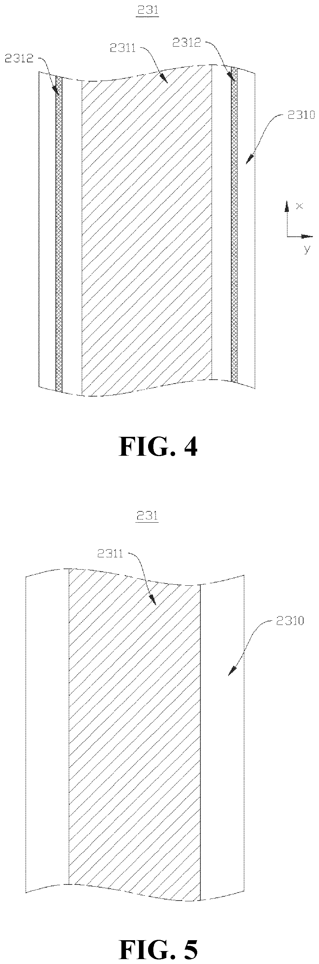

According to one aspect of an embodiment of the present application, a battery electrode plate is provided. Referring to FIG. 4 and FIG. 5 for details. FIG. 4 illustrates a structure of one surface of a section of a battery electrode plate 231 according to an embodiment of the present application. FIG. 5 illustrates a structure of the other surface of the section of the battery electrode plate 231 according to this embodiment of the present application. The battery electrode plate 231 includes an electrode plate body 2310, and active material layers 2311 are respectively arranged on two surfaces of the electrode plate body 2310. The electrode plate 231 further includes an identification layer 2312. The identification layer 2312 is arranged on at least one surface and makes coatings on the two surfaces different in shape or position.

Taking a lithium-ion battery as an example, the active material layer on the battery electrode plate includes a positive electrode material layer and a negative electrode material layer formed through coating. A positive electrode material may be typically lithium iron phosphate, and a negative electrode material may be typically selected from materials such as natural graphite and synthetic graphite. The identification layer 2312 may be formed by coating with a colloidal material that is easy to identify and insulating.

The coating on the surface of the electrode plate body 2310 refers to a coating structure composed of the active material layer 2311 and the identification layer 2312 on one surface of the electrode plate body 2310. The shapes or positions of the coatings on the two surfaces being different may be specifically embodied in that the identification layer 2312 is only arranged on one surface of the electrode plate body 2310, and the other surface is not provided with the identification layer 2312, so that the two surfaces of the electrode plate body 2310 can be visually distinguished by the naked eye or a machine. The shapes or positions of the coatings on the two surfaces being different may also be embodied in that the identification layers 2312 are arranged on the two surfaces of the electrode plate body 2310, but the identification layers 2312 on the two surfaces are different in shape or position, so that the two surfaces of the electrode plate body 2310 can be distinguished by the naked eye or the machine.

By arranging the identification layer 2312 on the at least one surface of the electrode plate body 2310 and making the coatings on the two surfaces different in shape or position, the two surfaces of the electrode plate body 2310 can be accurately identified and distinguished by the naked eye or the machine, thereby ensuring that the battery electrode plate 231 can be accurately positioned, produced, and assembled in the subsequent process.

Continuing to refer to FIG. 4 and FIG. 5, according to some embodiments of the present application, the identification layer 2312 is arranged only on one surface of the electrode plate body 2310.

By arranging the active material layer 2311 and the identification layer 2312 on one surface of the electrode plate body 2310 and arranging only the active material layer 2311 on the other surface, the two surfaces of the battery electrode plate 231 are distinguished and identified.

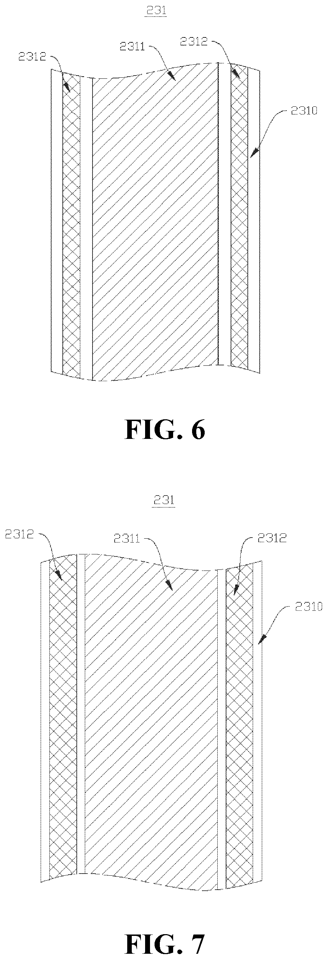

Referring to FIG. 6 and FIG. 7, FIG. 6 illustrates a structure of one surface of a section of a battery electrode plate 231 according to another embodiment of the present application, and FIG. 7 illustrates a structure of the other surface of the section of the battery electrode plate 231 according to the another embodiment of the present application. According to some embodiments of the present application, the identification layers 2312 are arranged on two surfaces of the electrode plate body 2310, and the identification layers 2312 on the two surfaces are different in shape or position.

As shown in FIG. 6 and FIG. 7, the two surfaces of the battery electrode plate 231 can be distinguished by setting the identification layers 2312 on the two surfaces of the electrode plate body 2310 to be different in position and width.

It is to be understood that in other embodiments of the present application, the two surfaces of the battery electrode plate 231 can be distinguished by setting the identification layers 2312 on the two surfaces of the electrode plate body 2310 to be different. For example, the identification layer 2312 on one surface is set into a strip rectangle, and the identification layer 2312 on the other surface is set into a strip wave shape. The specific shapes, positions and sizes of the identification layers 2312 on the two surfaces of the electrode plate body 2310 are not limited, as long as the two surfaces can be distinguished and identified.

The two surfaces of the battery electrode plate 231 are distinguished and identified by setting the identification layers 2312 on the two surfaces of the electrode plate body 2310 to be different in shape or position.

Referring to FIG. 4 again, according to some embodiments of the present application, on one surface of the electrode plate body 2310 provided with the identification layer 2312, the identification layer 2312 and the active material layer 2311 extend in a first direction and are spaced in a second direction, and both the first direction and the second direction are located on the surface of the electrode plate body 2310 and are perpendicular to each other.

As shown in FIG. 4, the first direction is an x-axis direction in the figure, and the second direction is a y-axis direction in the figure.

It is to be noted that FIG. 4 and FIG. 5 only show the structure of a section of the battery electrode plate 231. The battery electrode plate 231 may be a rolled battery electrode plate or a stacked battery electrode plate. The extension direction of the battery electrode plate 231 (e.g., the extension direction of the identification layer 2312 and the active material layer 2311) is the x-axis direction in FIG. 4.

Specifically, on the surface with the identification layer 2312, the identification layer 2312 may be sandwiched between the two sides of the active material layer 2311 shown in FIG. 4. It is to be understood that the identification layer 2312 may also make contact with the active material layer 2311, or is only arranged on one side of the active material layer 2311 in a spaced manner.

The identification layer 2312 and the active material layer 2311 extend in the first direction, thereby ensuring uniformity of the appearance of the battery electrode plate 231, and facilitating the coating of the identification layer 2312 and the active material layer 2311. The identification layer 2312 and the active material layer 2311 are spaced in the second direction, thereby avoiding the situation that the identification layer 2312 makes contact with the active material layer 2311, causing the identification layer 2312 to be less easy to identify, and resulting in difficulties in distinguishing the two surfaces of the battery electrode plate 231.

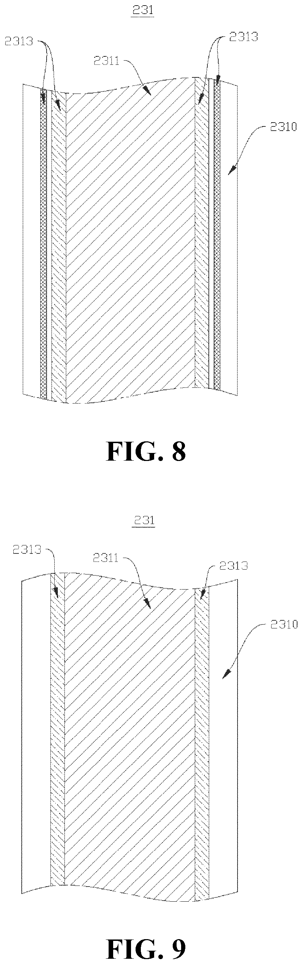

Referring to FIG. 8 and FIG. 9, FIG. 8 illustrates a structure of one surface of a section of a battery electrode plate 231 according to another embodiment of the present application, and FIG. 9 illustrates a structure of the other surface of the section of the battery electrode plate 231 according to the another embodiment of the present application. According to some embodiments of the present application, on one surface of the electrode plate body 2310 provided with the identification layer 2312, the identification layer 2312 and the active material layer 2311 extend in a first direction, the identification layer 2312 includes at least two identification strips 2313 which are spaced in a second direction, and both the first direction and the second direction are located on the surface of the electrode plate body 2310 and are perpendicular to each other.

As shown in FIG. 8 and FIG. 9, each of the two sides of the active material layer 2311 on one surface of the battery electrode plate 231 is provided with two spaced identification strips 2313, where one identification strip 2313 makes contact with the edge of the active material layer 2311. Each of the two sides of the active material layer 2311 on the other surface of the battery electrode plate 231 is provided with one identification strip 2313, and the identification strips 2313 make contact with the edge of the active material layer 2311. By arranging the identification strips 2313 in contact with the edge of the active material layer 2311 on each of the two surfaces of the battery electrode plate 231, insulating protection is achieved for the two sides of the active material layer 2311, thereby providing a favorable working condition for the active material layer 2311, helping to prolong the service life of the battery electrode plate 231, and avoiding the short-circuit fault occurring to the battery electrode plate 231.

The identification strips 2313 may be made of colloidal materials with insulation properties, thereby ensuring insulating protection for the edge of the active material layer 2311.

By setting the identification layer 2312 to have the two separate identification strips 2313, one of the identification strips 2313 may make contact with the active material layer 2311, and therefore the two sides of the active material layer 2311 can be insulated while ensuring that the two surfaces of the battery electrode plate 231 are rapidly identified.

According to some embodiments of the present application, the identification layer 2312 is an insulating layer.

Specifically, the identification layer 2312 may be made of a material such as boehmite and alumina as a main insulation material, and may also be made of a material such as polyvinylidene fluoride, styrene-butadiene rubber, polyacrylic acid, and polyimide as a colloidal material, thereby forming a coating that has both identification capability and insulation capability.

By setting the identification layer 2312 as the insulating layer, the identification layer 2312 coating the electrode plate body 2310 can facilitate identification of the two surfaces of the battery electrode plate 231, and insulating protection for the active material layer 2311 on the electrode plate body 2310.

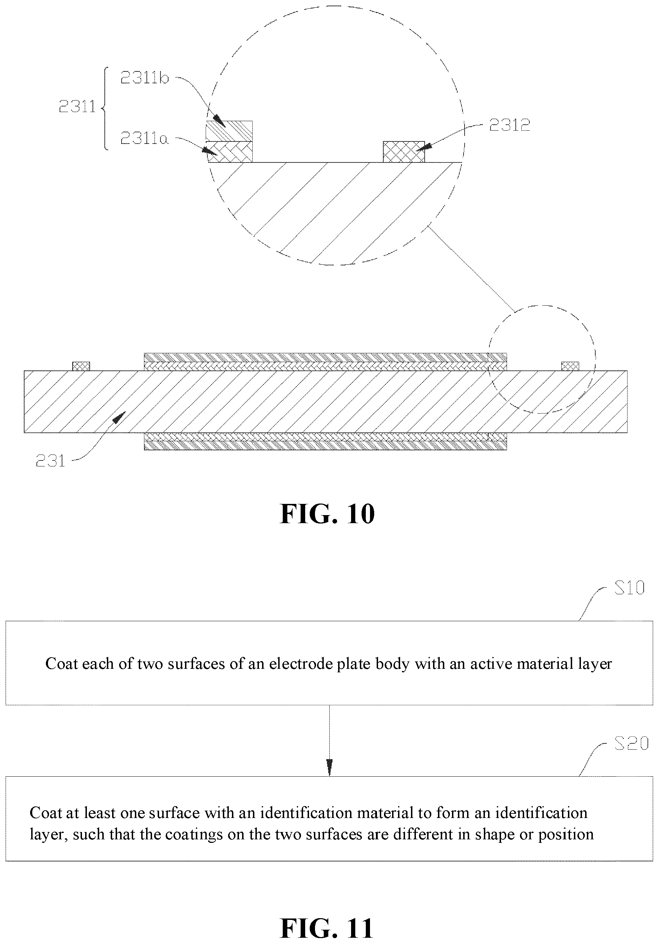

Referring to FIG. 10, FIG. 10 illustrates a cross-sectional structure of a battery electrode plate 231 according to another embodiment of the present application. According to some embodiments of the present application, the active material layer 2311 sequentially includes a conductive adhesive layer 2311a and an active layer 2311b on the surface of the electrode plate body 2310, and the identification layer 2312 is the conductive adhesive layer 2311a.

The conductive adhesive layer 2311a may be made of conductive carbon black as a conductive main material, and polyvinylidene fluoride, styrene-butadiene rubber, polyacrylic acid, polyamide, and other materials as the colloidal material.

For some battery electrode plates 231, the active material layer 2311 on the surface of the battery electrode plate 231 is formed by sequentially coating the surface of the battery electrode plate 231 with the conductive adhesive layer 2311a and the active layer 2311b. In order to improve the coating efficiency of the battery electrode plate 231, the identification layer 2312 is also set as the conductive adhesive layer 2311a, which allows simultaneous coating of the conductive adhesive layer 2311a in the identification layer 2312 and the identification layer 2312, thereby enhancing the processing efficiency of the battery electrode plate 231. Additionally, by setting the identification layer 2312 as the conductive adhesive layer 2311a, the kinds of coatings are reduced, thereby reducing preparation work before the coating.

According to some embodiments of the present application, the electrode plate body 2310 is a single-layer current collector or a composite current collector.

The current collector refers to a structure or component that collects current, made of metal foil such as copper foil and aluminum foil. The single-layer current collector is composed of a layer of metal foil, while the composite current collector is formed by combining a plurality of layers of metal foil.

The single-layer current collector or the composite current collector is used for collecting the current generated by the active material of the battery in order to form a larger current for external output, which requires sufficient contact between the current collector and the active material layer 2311, and minimum internal resistance.

According to another aspect of this embodiment of the present application, a battery electrode plate coating method is provided. Referring to FIG. 11 for details, FIG. 11 illustrates a flow of a battery electrode plate coating method according to an embodiment of the present application. The battery electrode plate includes an electrode plate body. The battery electrode plate coating method includes:
S10: Coat each of two surfaces of the electrode plate body with an active material to form an active material layer;
S20: Coat at least one surface with an identification material to form an identification layer, such that the coatings on the two surfaces are different in shape or position, thereby forming a battery electrode plate.

Specifically, the surface of the electrode plate body is coated with the active material layer and the identification layer through cooperation of a coating head and a backup roll, and the coating of the active material layer and the identification layer may also be achieved through a backup roll with a printing function.

By coating at least one surface of the electrode plate body with the identification material to form the identification layer, the coatings on the two surfaces are different in shape or position, such that the two surfaces of the electrode plate body can be accurately identified and distinguished by the naked eye or the machine, thereby ensuring that the battery electrode plate can be accurately positioned, produced, and assembled in the subsequent process.

According to some embodiments of the present application, only one surface of the electrode plate body is coated with the identification material to form the identification layer.

By coating one surface of the electrode plate body with the active material layer and the identification layer and only coating the other surface with the active material layer, the two surfaces of the battery electrode plate are distinguished and identified.

According to some embodiments of the present application, the two surfaces of the electrode plate body are respectively coated with the identification material to form the identification layers, and the identification layers on the two surfaces are different in shape or position.

By setting the identification layers on the two surfaces of the electrode plate body to be different in shape or position, the two surfaces of the battery electrode plate are distinguished and identified.

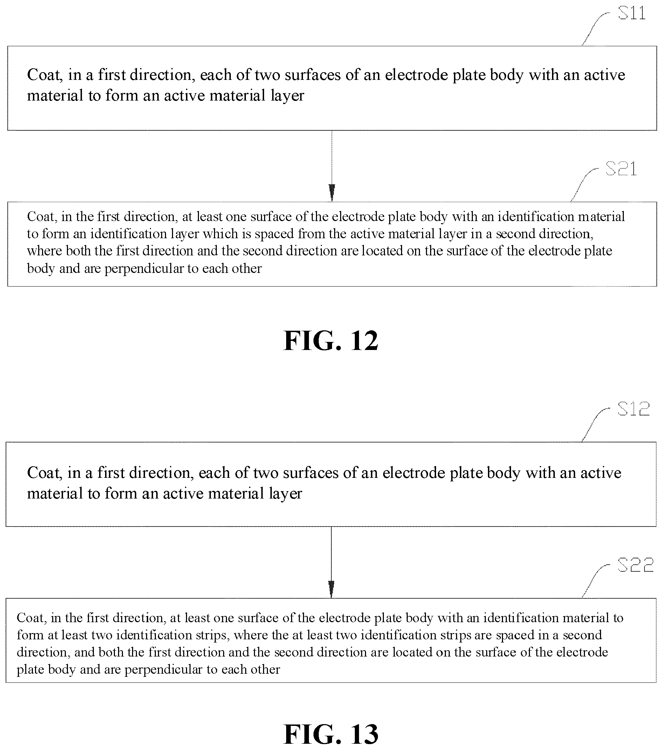

Referring to FIG. 12, FIG. 12 illustrates a flow of a battery electrode plate coating method according to another embodiment of the present application. According to some embodiments of the present application, step S10 includes: S 11: coat each of two surfaces of an electrode plate body with an active material in a first direction to form an active material layer.

Step S20 includes: S21: coat at least one surface of the electrode plate body with an identification material in the first direction to form an identification layer which is spaced from the active material layer in a second direction, where both the first direction and the second direction are located on the surface of the electrode plate body and are perpendicular to each other.

By the coating of the identification layer and the active material layer in the first direction, uniformity of the appearance of the battery electrode plate is guaranteed, and the coating of the identification layer and the active material layer is facilitated. The identification layer and the active material layer are spaced in the second direction, thereby avoiding the situation that the identification layer makes contact with the active material layer, causing the identification layer not easy to identify, and resulting in difficulties in distinguishing the two surfaces of the battery electrode plate.

Referring to FIG. 13, and FIG. 13 illustrates a flow of a battery electrode plate coating method according to another embodiment. According to some embodiments of the present application, step S10 includes: S12: coat each of two surfaces of an electrode plate body with an active material in a first direction to form an active material layer.

Step S20 includes: S22: coat at least one surface of the electrode plate body with an identification material in the first direction to form at least two identification strips, where the at least two identification strips are spaced in a second direction, and both the first direction and the second direction are located on the surface of the electrode plate body and are perpendicular to each other.

By arranging the identification strips in contact with the edge of the active material layer on each of the two surfaces of the battery electrode plate, insulating protection is achieved for the two sides of the active material layer, thereby providing a favorable working condition for the active material layer, helping to prolong the service life of the battery electrode plate, and avoiding the short-circuit fault occurring to the battery electrode plate. The identification strips on one surface of the battery electrode plate are spaced from the identification layer to ensure rapid identification of the two surfaces of the battery electrode plate.

By coating the identification layer to have the two separate identification strips, one of the identification strips may make contact with the active material layer for the coating, and therefore the two sides of the active material layer can be insulated while ensuring that the two surfaces of the battery electrode plate are rapidly identified.

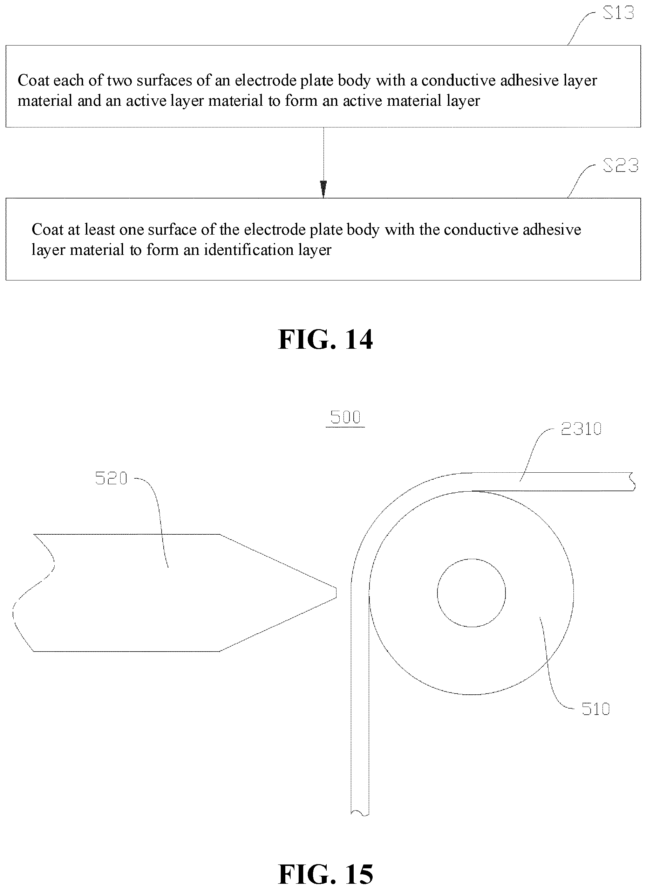

Referring to FIG. 14, FIG. 14 illustrates a flow of a battery electrode plate coating method according to another embodiment of the present application. According to some embodiments of the present application, step S10 includes: S13: coat each of two surfaces of an electrode plate body with a conductive adhesive layer material and an active layer material to form an active material layer.

Step S20 includes: S23: Coat at least one surface of the electrode plate body with the conductive adhesive layer material to form an identification layer.

For some battery electrode plates, the active material layer on the surface of the battery electrode plate is formed by sequentially coating the surface of the battery electrode plate with the conductive adhesive layer and the active layer. In order to improve the coating efficiency of the battery electrode plate, the identification layer is also set as the conductive adhesive layer, which allows simultaneous coating of the conductive adhesive layer in the identification layer and the identification layer, thereby enhancing the coating efficiency of the battery electrode plate. Additionally, by setting the identification layer as the conductive adhesive layer, the kinds of coatings are reduced, thereby reducing preparation work before the coating.

According to another aspect of this embodiment of the present application, a battery electrode plate coating device is further provided. Referring to FIG. 15 for details, FIG. 15 illustrates a structure of a battery electrode plate coating device 500 according to an embodiment of the present application. The battery electrode plate 231 includes an electrode plate body 2310. The battery electrode plate coating device 500 includes: a backup roll 510 and a coating structure 520. The backup roll 510 is used for driving the battery electrode plate 231 to move. The coating structure 520 is arranged on one side of the backup roll 510, and is used for respectively coating each of the two surfaces of the electrode plate body 2310 with an active material to form an active material layer 2311, and coating at least one surface with an identification material to form an identification layer 2312. The coatings on the two surfaces are different in shape or position.

The backup roll 510 is cylindrical, and the battery electrode plate 231 is placed on the backup roll 510. The backup roll 510 rotates to drive the battery electrode plate 231 for movable coating.

The coating structure 520 is provided with a coating outlet. The coating outlet is aligned with one side of the backup roll 510. By adding a coating into the coating structure 520, the coating is pushed by pressure to be extruded out from the coating outlet, thereby coating the battery electrode plate 231.

By arranging the backup roll 510, movement control over the battery electrode plate 231 is achieved. By the coating structure 520, the surface of the electrode plate body 2310 is coated with the active material and the identification material, and the coatings on the two surfaces are different in shape or position, such that the two surfaces of the electrode plate body 2310 can be accurately identified and distinguished by the naked eye or the machine, thereby ensuring that the battery electrode plate 231 can be accurately positioned, produced, and assembled in the subsequent process.

In some embodiments of the present application, the coating structure 520 may be provided with a plurality of coating outlets, such that one surface of the battery electrode plate is coated with the active material and the identification material at the same time, consumption in time cost during production of the battery electrode plate is reduced, meanwhile, relative positions of the active material and the identification material on the battery electrode plate 231 can be effectively guaranteed, and accordingly, the production yield of the battery electrode plate 231 is improved.

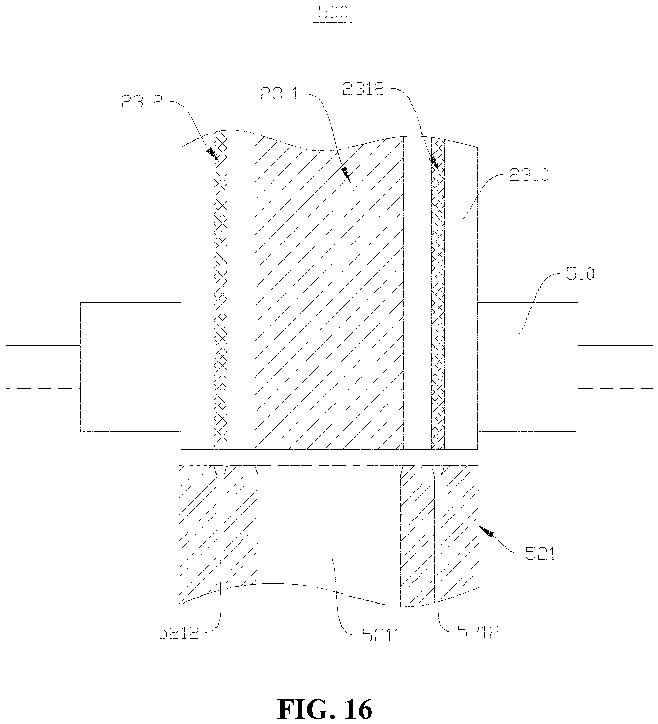

Referring to FIG. 16, FIG. 16 illustrates a side view of a sectioned first coating head 521 in a battery electrode plate coating device 500 according to an embodiment of the present application. According to some embodiments of the present application, the coating structure 520 includes the first coating head 521 aligned with one side of the backup roll 510 for coating the electrode plate body 2310 on the backup roll 510. The first coating head 521 is internally provided with a first flow channel 5211 and a second flow channel 5212. An outlet of the first flow channel 5211 is spaced apart from an outlet of the second flow channel 5212. The first flow channel 5211 is used for circulating the active material, and the second flow channel 5212 is used for circulating the identification material.

Specifically, when one surface of the electrode plate body 2310 is coated, the active material is conveyed into the first flow channel 5211, the identification material is conveyed into the second flow channel 5212, and meanwhile, the active material and the identification material are extruded out from the outlets of the first flow channel 5211 and the second flow channel 5212 to coat the electrode plate body 2310, thereby realizing simultaneous coating of the active material and the identification material. When the other surface of the electrode plate body 2310 is coated, the active material is only conveyed into the first flow channel 5211, and the active material is extruded out from the outlet of the first flow channel 5211 to coat the electrode plate body 2310, thereby coating the other surface of the electrode plate body 2310 with the active material.

The first coating head 521 is aligned with one side of the backup roll 510, making the material extruded out from the first coating head 521 smoothly coat the electrode plate body 2310. Through the first flow channel 5211 and the second flow channel 5212 spaced in the first coating head 521, the first flow channel 5211 is used for circulating the active material, and the second flow channel 5212 is used for circulating the identification material, thereby realizing simultaneous coating of the active material and the identification material, effectively ensuring the alignment degree between the identification material and the active material coating the electrode plate body 2310, then, improving the production yield of the electrode plate body 2310, ensuring the neatness of the appearance of the electrode plate body 2310, and facilitating easy identification on the two surfaces of the battery electrode plate 231.

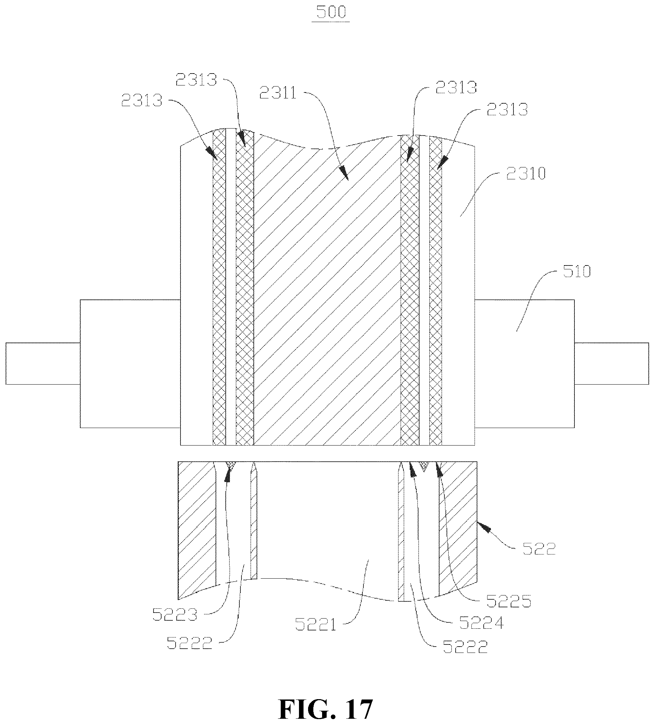

Referring to FIG. 17, FIG. 17 illustrates a structure of a sectioned second coating head 522 in a battery electrode plate coating device 500 according to another embodiment of the present application. According to some embodiments of the present application, the coating structure 520 includes the second coating head 522 aligned with one side of the backup roll 510 for coating the electrode plate body 2310 on the backup roll 510. The second coating head 522 is internally provided with a third flow channel 5221 and a fourth flow channel 5222. The third flow channel 5221 is used for circulating the active material, and the fourth flow channel 5222 is used for circulating an insulating material. An outlet of the fourth flow channel 5222 is provided with a partition structure 5223. The partition structure 5223 divides the outlet of the fourth flow channel 5222 into a first outlet 5224 and a second outlet 5225 which are partitioned. The edge of an outlet of the third flow channel 5221 is in contact with the first outlet 5224.

Specifically, after the insulating material is conveyed into the fourth flow channel 5222, the insulating material is extruded out through the first outlet 5224 and the second outlet 5225, and two identification strips 2313 are respectively formed on the electrode plate body 2310.

The partition structure 5223 and a shell of the second coating head 522 may be integrally formed, thereby ensuring structure strength of the partition structure 5223, and avoiding fracture of the partition structure 5223 due to excessive extrusion pressure from the insulating material.

By arranging the third flow channel 5221 and the fourth flow channel 5222 in the second coating head 522, the third flow channel 5221 is used for circulating the active material, and the fourth flow channel 5222 is used for circulating the insulating material, thereby realizing simultaneous coating of the active material and the insulating material, ensuring the contact alignment degree and effectiveness of the identification strips 2313 and the active material layer 2311 on the electrode plate body 2310, and achieving reliable and effective insulating protection for the active material by the insulating material. By arranging the partition structure 5223 at the outlet of the fourth flow channel 5222 and dividing the outlet of the fourth flow channel 5222 into the spaced first outlet 5224 and second outlet 5225, the flow channel structure in the second coating head 522 is effectively simplified, and the mold opening cost of the second coating head 522 is reduced. By conveying the insulating material into the fourth flow channel 5222, the insulating material respectively forms the spaced identification strips 2313 and identification layer 2312 on the electrode plate body 2310 through the first outlet 5224 and the second outlet 5225, thereby realizing simultaneous coating of the active material, the identification material, and the insulating material, and ensuring the alignment degree of the active material, the identification material, and the insulating material. By using the same material for both the insulating material and the identification material, the early preparation work for the coating can be simplified, and the coating efficiency of the battery electrode plate 231 is improved.

Please continue to refer to FIG. 17. According to some embodiments of the present application, the partition structure 5223 is in the shape of a triangular prism, and one side surface is located on a plane where the outlet of the fourth flow channel 5222 is located.

By arranging the partition structure 5223 into the triangular prism, arranging one side surface of the partition structure 5223 on the plane where the outlet of the fourth flow channel 5222 is located, and ensuring that one of edges of the triangular prism faces the interior of the fourth flow channel 5222, the pressure exerted on the partition structure 5223 from the material circulating in the fourth flow channel 5222 is reduced, and stability of the partition structure 5223 is ensured.

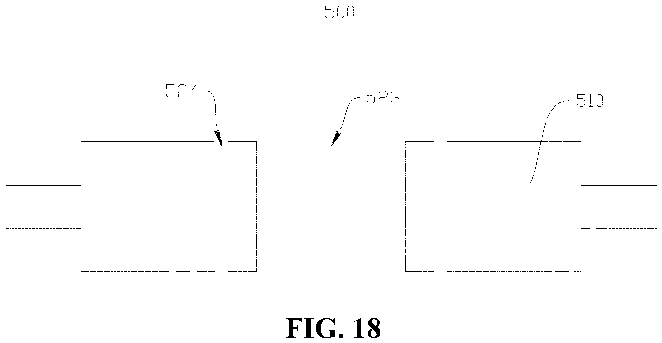

Referring to FIG. 18, FIG. 18 illustrates a structure of a battery electrode plate coating device 500 according to another embodiment of the present application. According to some embodiments of the present application, a coating structure 520 includes a first printing groove 523 and second printing grooves 524 which are formed in an annular side surface of the backup roll 510 in a circumferential direction. The first printing groove 523 is spaced from the second printing grooves 524. The first printing groove 523 is used for accommodating the active material, and the second printing groove 524 is used for accommodating the identification material.

In the process of coating the battery electrode plate 231, the active material is arranged in the first printing groove 523, the identification material is arranged in the second printing grooves 524, and considering the possibility of dripping of the active material and the identification material in the rotating process of the backup roll 510, the first printing groove 523 and the second printing grooves 524 may be set to have a smaller depth. The surfaces of the first printing groove 523 and the second printing grooves 524 are coated with the active material and the identification material to form a thin layer. Alternatively, a material accommodating box may be arranged at a bottom of the backup roll 510, such that the dripping material is collected in the accommodating box for secondary utilization.

When the backup roll 510 rotates, the electrode plate body 2310 is driven to move on the surface of the backup roll 510. The active material in the first printing groove 523 and the identification material in the second printing grooves 524 in the surface of the backup roll 510 make contact with the electrode plate body 2310, such that simultaneous printing and coating of the active material and the identification material on the surface of the electrode plate body 2310 are realized, and the coating alignment degree of the active material and the identification material can be effectively ensured.

For the above implementation that the active material includes the conductive adhesive layer material and the active layer material, during the first printing and coating, the first printing groove 523 and the second printing grooves 524 may be all filled with the conductive adhesive layer material. The conductive adhesive layer material printed and coated on the electrode plate body 2310 through the second printing grooves 524 is used as the identification material. During the second printing and coating, only the first printing groove 523 is filled with the active material, thereby realizing the printing and coating of the active material on the surface of the conductive adhesive layer material.

According to another aspect of this embodiment of the present application, a battery cell is provided, and includes the above battery electrode plate 231.

In the battery cell, one surface of the battery electrode plate 231 is provided with an active material layer 2311 and an identification layer 2312, and the other surface is only provided with the active material layer 2311, thereby distinguishing and identifying the two surfaces of the battery electrode plate 231. By arranging the identification layer 2312 on at least one side of the active material layer 2311 and separating the identification layer 2312 from the active material layer 2311, the two surfaces of the battery electrode plate 231 are conveniently distinguished and identified by the machine or an operator. Extension directions of the identification layer 2312 and the active material layer 2311 are parallel, thereby ensuring stability of the active material layer 2311 during work of the battery electrode plate 231, and effectively avoiding reduction and even failure of the properties of the active material layer 2311 due to mixing of the identification layer 2312 and the active material layer 2311.

Finally, it is to be noted that the above embodiments are merely used for illustrating rather than limiting the technical solutions of the present application; although the present application has been described in detail with reference to the above various embodiments, those of ordinary skill in the art should understand that the technical solutions recorded in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various examples can be combined in any manner as long as there is no structural conflict. The present application is not limited to the specific embodiments disclosed herein, but includes all technical solutions falling within the scope of the claims.

## Claims

1. A battery electrode plate, wherein the battery electrode plate comprises an electrode plate body with an active material layer provided on each of the two surfaces thereof; and the battery electrode plate further comprises an identification layer;
the identification layer being arranged on at least one surface, and the coatings on the two surfaces being different in shape or position.

2. The battery electrode plate according to claim 1, wherein the identification layer is arranged only on one surface.

3. The battery electrode plate according to claim 1, wherein the identification layers are respectively arranged on the two surfaces, and the identification layers on the two surfaces are different in shape or position.

4. The battery electrode plate according to any one of claims 1 to 3, wherein on one surface provided with the identification layer, the identification layer and the active material layer extend in a first direction and are spaced in a second direction, and both the first direction and the second direction are located on the surface and are perpendicular to each other.

5. The battery electrode plate according to any one of claims 1 to 3, wherein on one surface provided with the identification layer, the identification layer and the active material layer extend in a first direction, the identification layer comprises at least two identification strips, the at least two identification strips are spaced in a second direction, and both the first direction and the second direction are located on the surface and are perpendicular to each other.

6. The battery electrode plate according to any one of claims 1 to 3, wherein the identification layer is an insulating layer.

7. The battery electrode plate according to any one of claims 1 to 3, wherein the active material layer sequentially comprises a conductive adhesive layer and an active layer on the surface; and the identification layer is the conductive adhesive layer.

8. The battery electrode plate according to any one of claims 1 to 3, wherein the electrode plate body is a single-layer current collector or a composite current collector.

9. A battery electrode plate coating method, wherein the battery electrode plate comprises an electrode plate body, the method comprises:
coating each of two surfaces of the electrode plate body with an active material to form an active material layer; and
coating at least one surface with an identification material to form an identification layer, such that the coatings on the two surfaces are different in shape or position.

10. The battery electrode plate coating method according to claim 9, wherein only one surface is coated with the identification material to form the identification layer.

11. The battery electrode plate coating method according to claim 9, wherein each of the two surfaces is coated with the identification material to form the identification layer, and the identification layers on the two surfaces are different in shape or position.

12. The battery electrode plate coating method according to any one of claims 9 to 11, wherein the coating each of the two surfaces of the electrode plate body with an active material to form an active material layer comprises:
coating, in a first direction, each of the two surfaces with the active material to form the active material layer; and
the coating at least one surface with an identification material to form an identification layer comprises:
coating, in the first direction, the at least one surface with the identification material to form the identification layer, the identification layer and the active material layer being spaced in a second direction, and both the first direction and the second direction being located on the surface and perpendicular to each other.

13. The battery electrode plate coating method according to any one of claims 9 to 11, wherein the coating each of the two surfaces of the electrode plate body with an active material to form an active material layer comprises:
coating, in a first direction, each of the two surfaces with the active material to form the active material layer; and
the coating at least one surface with an identification material to form an identification layer comprises:
coating, in the first direction, the at least one surface with the identification material to form at least two identification strips, the at least two identification strips being spaced in a second direction, and both the first direction and the second direction being located on the surface and perpendicular to each other.

14. The battery electrode plate coating method according to any one of claims 9 to 11, wherein the coating each of two surfaces of the electrode plate body with an active material to form an active material layer comprises:
sequentially coating each of the two surfaces with a conductive adhesive layer material and an active layer material to form the active material layer; and
the coating at least one surface with an identification material to form an identification layer comprises:
coating the at least one surface with the conductive adhesive layer material to form the identification layer.

15. A battery electrode plate coating device, wherein the battery electrode plate comprises an electrode plate body, the battery electrode plate coating device comprises:
a backup roll used for driving the electrode plate body to move; and
a coating structure arranged on one side of the backup roll and used for coating each of two surfaces of the electrode plate body with an active material to form an active material layer, and coating at least one surface with an identification material to form an identification layer, the coatings on the two surfaces being different in shape or position.

16. The battery electrode plate coating device according to claim 15, wherein the coating structure comprises a first coating head aligned with one side of the backup roll and used for coating the electrode plate body on the backup roll; and
a first flow channel and a second flow channel are arranged in the first coating head, the first flow channel is used for circulating the active material, and the second flow channel is used for circulating the identification material.

17. The battery electrode plate coating device according to claim 15 or 16, wherein the coating structure comprises a second coating head aligned with one side of the backup roll and used for coating the electrode plate body on the backup roll;
a third flow channel and a fourth flow channel are arranged in the second coating head, the third flow channel is used for circulating the active material, and the fourth flow channel is used for circulating the identification material; and
an outlet of the fourth flow channel is provided with a partition structure, the partition structure divides the outlet of the fourth flow channel into a first outlet and a second outlet which are partitioned, and an edge of an outlet of the third flow channel is in contact with an edge of the first outlet.

18. The battery electrode plate coating device according to claim 17, wherein the partition structure is in the shape of a triangular prism, and one side surface of the partition structure is located on a plane where the outlet of the fourth flow channel is located.

19. The battery electrode plate coating device according to any one of claims 15 to 18, wherein the coating structure comprises a first printing groove and second printing grooves which are formed in an annular side surface of the backup roll in a circumferential direction, the first printing groove is spaced from the second printing grooves, the first printing groove is used for accommodating the active material, and the second printing grooves are used for accommodating the identification material.

20. A battery cell, comprising the battery electrode plate according to any one of claims 1 to 8.
